Europäisches Patentamt

(19) European Patent Office

Office européen des brevets

(11) Publication number: **0 032 006**
**A2**

(12) **EUROPEAN PATENT APPLICATION**

(21) Application number: **80304435.3**

(22) Date of filing: **09.12.80**

(51) Int. Cl.³: **B 65 D 33/20**

(30) Priority: **31.12.79 GB 7944659**
**10.03.80 GB 8007992**
**17.03.80 GB 8008961**

(43) Date of publication of application:
**15.07.81 Bulletin 81'28**

(84) Designated Contracting States:
**DE FR IT NL SE**

(71) Applicant: **Sanders, Bernard**
**Mont Clos Old Beaumont Hill**
**St. Peter Jersey Channel Islands(GB)**

(72) Inventor: **Sanders, Bernard**
**Mont Clos Old Beaumont Hill**
**St. Peter Jersey Channel Islands(GB)**

(74) Representative: **Evans, David Charles et al,**
**F.J. CLEVELAND & COMPANY 40-43, Chancery Lane**
**London, WC2A 1JQ(GB)**

(54) A bag.

(57) A bag (40) has two opposite facing surfaces (45,48) defining a pre-formed opening (47) at least one of the surfaces (45, 48) having a re-usable pressure sensitive adhesive (49) thereon so that closure of the opening (47) is effected by pressing the said surfaces (45, 48) together in the area of the adhesive (49) thereby to provide a re-openable closure.

EP 0 032 006 A2

COMPLETE DOCUMENT

Croydon Printing Company Ltd.

DESCRIPTION

This invention relates to a bag and, more particularly, to a bag having means for closing an opening thereof.

It is known to provide bags of synthetic plastics film material having means for adhesively reclosing an opening thereof, such means generally comprising adhesive located on a bag so that a flap, when folded to close an opening of the bag, can be secured to an adjacent surface of the bag by means of the adhesive.

A common method of applying a pressure sensitive adhesive to material from which a bag is to be formed is to coat the adhesive initially on a pre-treated surface of a tape, the surface being pre-treated by applying a release coating thereto, and then to apply the tape to the material from which the bag is to be formed so that the tape is secured to the material by means of the adhesive. The tape subsequently is removed from the material and, since the surface of the tape adjacent the adhesive is provided with a release coating, the tape is peeled from the adhesive leaving the adhesive remaining on the material from which a bag is to be formed. Such tapes generally are referred to as release tapes.

In addition to providing a convenient means whereby adhesive may be applied to material which is to form a bag, a release tape provides a necessary function of covering the adhesive until a bag is to be closed and thereby reduces handling difficulties which would otherwise arise without the provision of the tape.

However, the provision of release tape in the manufacture and handling of bags has serious disadvantages. One disadvantage is the cost of providing the tape. This can be significant in the production of high volume, low profit bags. A second disadvantage is the necessity to remove the tape in order to expose the adhesive. If removal is to be effected by machinery, then suitable machinery must be provided additional to the cost of providing the basic bag making machinery and, if removal is to be effected by hand, the operation is time consuming and often results in generation of static electricity which increases difficulty of removal.

It is desirable, therefore, to provide a bag having an adhesive re-openable closure whereby the bag may be opened to permit contents to be inserted into or removed from the bag through an opening thereof and the opening may be re-closed by the closure and re-opened and re-closed repetitively but wherein it is unnecessary to use a release tape, either during application of adhesive which is to form the closure or subsequently.

The term 'opening' includes a closed portion of the bag adapted to be opened to provide access to the interior of the bag.

According to the present invention, there is provided a bag having two opposite facing surfaces defining a pre-formed opening, at least one of said surfaces having a re-usable adhesive thereon so that closure of the opening is effected by pressing the said surfaces together in the area of the adhesive thereby to provide a re-openable closure.

The adhesive is re-usable in that the said surfaces, after having been pressed together so as to be adhesively secured one to
another, can subsequently be repetitively
separated and reunited by the adhesive.

Since the adhesive is covered by an opposite facing surface of the bag, the adhesive is not exposed outside the bag and therefore presents no difficulties in handling the bag once formed. In consequence, there is no necessity to provide a release tape to cover the adhesive.

The bag may be provided with a pouch and at least one of said surfaces may comprise a surface of a wall of said pouch.

The pouch may be located on an outer surface of the bag.

The pouch may comprise a flap, opposite side margins of which are secured to corresponding side margins of the bag thereby forming the pouch, the flap being adapted to be unfolded from a pouch forming position to open the bag.

The flap may be provided with rows of perforations, each row extending in substantially spaced parallel relation adjacent a corresponding one of the side margins of the flap.

Additional adhesive may be located inwardly of the opening for adhesively securing together walls of the bag.

In this manner, a bag constructed from suitable impermeable material is watertight and airtight as required for vacuum packaging of articles.

Instead of being located on an outer surface of the bag, the pouch may be located on an inner surface of the bag.

A second pouch may be provided in addition to the said pouch.

The second pouch may be located on an inner surface of the bag.

The pouches may be contiguous one with another and may comprise material having a weakened portion whereby the pouches are separable one from another along said weakened portion.

Also according to the present invention there is provided a method of manufacturing bags from superimposed layers of web material comprising the step of applying adhesive to a said layer before applying a superimposed layer thereon so that, when the superimposed layer is applied thereon, the said layer and the said superimposed layer are adhesively secured one to another.

The method may comprise an initial step of folding an initial layer of web material so that a portion of said folded initial layer comprises the said layer for receiving said adhesive.

The method may comprise a subsequent step of folding an unfolded portion of said folded initial layer onto said layer at a location above said adhesive to provide said superimposed layer.

Also according to the present invention there is provided a method of manufacturing bags from web material having a strip of pressure sensitive material extending substantially parallel to a marginal edge portion of the web material comprising the steps of folding a portion of the web material on a first longitudinal fold to provide two layers, one overlying another, and folding another portion of the web material on a second longitudinal fold to provide a third layer contacting said adhesive.

The method may comprise an initial step of applying a component relative to the web material in spaced relation transversely of the web material from said adhesive.

Furthermore, according to the present invention, there is provided a method of manufacturing bags from flexible tubular material including the steps of applying at least two spaced substantially parallel strips of pressure sensitive material longitudinally of the tube, slitting the tube longitudinally between said two strips, folding opposite facing severed marginal portions about longitudinal folds in opposite directions inwardly of the tube so that said strips are located opposite an inner surface of a wall of said tube and slitting said wall longitudinally at a transverse distance equi-distant from said longitudinal folds.

Following is a description, by way of example only and with reference to the accompanying drawings, of methods of carrying the invention into effect.

In the drawings:-

Figure 1 is an elevation of one embodiment a bag in accordance with the present invention,

Figure 2 is a cross section on the line II-II of Figure 1,.

Figures 3 to 7 inclusive are diagrammatic representations showing stages of manufacture of the bag shown in Figures 1 and 2,

Figures 8 to 12 inclusive are diagrammatic cross sections of variations of the embodiment of the bag shown in Figure 2,

- 7b -

Figure 13 is a diagrammatic cross section of another embodiment of a bag in accordance with the present invention,

Figures 14 to 18 inclusive are diagrammatic representations showing various stages of manufacture of the bag shown in Figure 13,

Figure 19 is a diagrammatic cross section of a variation of the bag shown in Figure 13,

Figure 20 is a diagrammatic cross section of another embodiment of a bag in accordance with the present invention,

Figure 21 is an elevation of a further embodiment of a bag in accordance with the present invention,

Figure 22 is a cross section on the line XII-XII of Figure 21,

Figures 23 to 27 inclusive are diagrammatic representations of various stages in the manufacture of the bag shown in Figures 21 and 22,

Figures 28 and 29 are diagrammatic cross sections of variations of the bag shown in Figures 21 and 22,

Figure 30 is a diagrammatic cross section of another embodiment of a bag in accordance with the present invention,

Figures 31 to 35 inclusive are diagrammatic representations showing various stages in the manufacture of the bag shown in Figure 30 and,

Figure 36 is a diagrammatic cross section of a variation of the bag shown in Figure 30.

Figures 37 and 39 are diagrammatic representations of methods of using a bag of the type described with reference to Figures 21 to 27 for form/fill/seal applications,

Figure 38 is a diagrammatic representation of a method of using a bag of the type described with reference to Figure 30,

Figures 40 to 42 are diagrammatic representations of stages in a simultaneous form/fill/seal application of two bag formations of the type described with reference to Figures 21 to 27,

Figures 43 and 44 are diagrammatic representations of stages in an alternative method of manufacture of the bag of the type described with reference to Figure 30,

Figures 45 and 46 are diagrammatic representations of stages in an alternative method of manufacture of the bag of the type described with reference to Figures 21 and 22, and

Figures 47 to 50 are diagrammatic representations of stages in an alternative method of manufacture of the bag of the type described with reference to anyone of Figures 1 and 2 or 8 or 10 to 13 or 20.

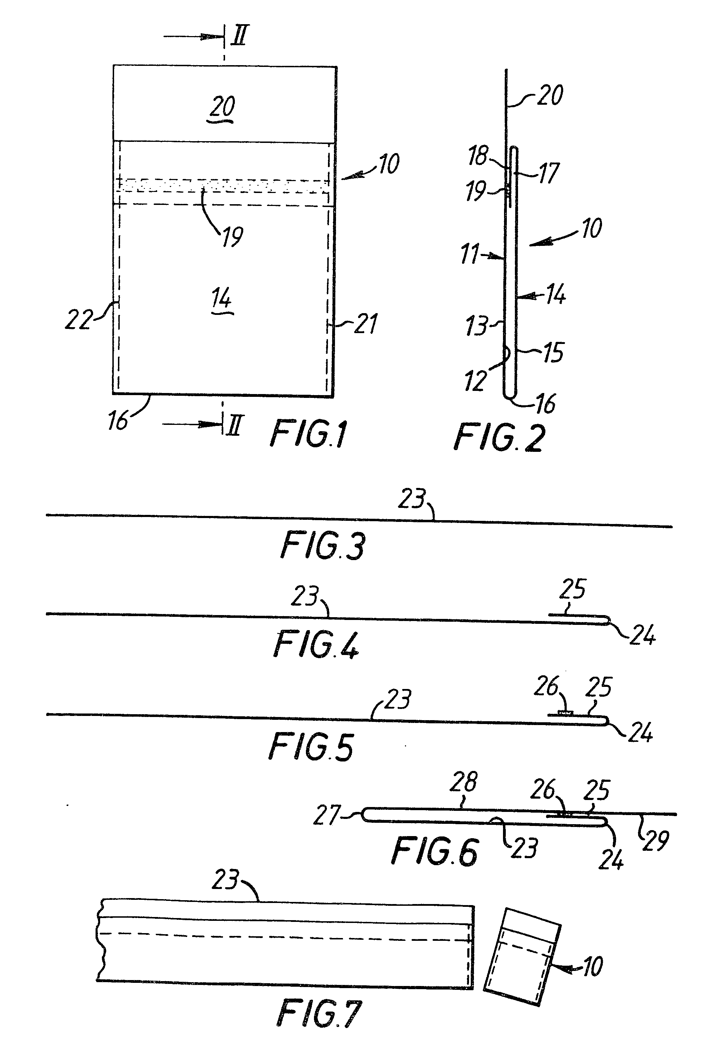

Referring now to Figures 1 and 2 of the drawings, there is shown a bag 10 made of synthetic plastics film material and comprising a rectangular back panel 11 having a front surface 12 and rear surface 13, a front panel 14 contiguous with the rear panel 11 by means of a bottom fold 16, the front panel 14 having a front surface 15, and a pouch 17 contiguous with an upper portion of the front panel 14, the pouch 17 being located between the back panel 11 and the front panel 14 and being entered in an upward direction from the bottom fold 16. The pouch 17 has a rear outer surface 18 facing the front surface 12 of the back panel 11. The rear outer surface 18 of the pouch 17 is provided with a strip of pressure sensitive adhesive 19 extending transversely of the pouch 17 in a direction from left to right of Figure 1. The rear panel 11 extends in an upward direction from the bottom fold 16 a distance greater than the front panel 14 to provide a flap 20. The back panel 11, front panel 14 and pouch 17 are of equal width in a direction from left to right of Figure 1 and are sealed one to another by means of heat seals 21, 22 extending parallel one to another in an upward direction from the bottom fold 16 adjacent and parallel to corresponding side edges of the panels 11 and 14.

The adhesive 19 is a reusable adhesive in that the front surface 12 of the back panel 11 is adhesively secured to the opposite facing rear surface 18 of the pouch 17 by means of the adhesive 19 when the two surfaces are pressed together but in that the surfaces 12 and 18 may be separated and reunited reptitively by the adhesive 19. In this manner, the bag 10 may be opened and resealed reptitively.

In use, the bag 10 is opened by separating the rear surface 18 of the pouch 17 from the front surface 12 of the back panel 11. Contents are then inserted into the bag and bag is closed either by tensioning the bag in a longitudinal direction of the adhesive strip 19 so that the rear surface 18 of the pouch 17 and the front surface 12 of the back panel 11 are drawn into contact with one another in the area of the adhesive 19 or by nipping the front and back panels 14 and 11 together longitudinally of the adhesive strip 19, thereby forcing the rear surface 18 of the pouch 17 and the front surface 12 of the back panel 11 into contact one with another in the area of the adhesive 19.

The arrangement is such that, if the bag 10 provided with contents is inverted from the position shown in Figures 1 and 2, the effect will be that the contents will be urged by gravity into the pouch 17 and will cause the walls of the pouch to move in opposite directions thereby urging the rear surface 18 of the pouch 17 towards the front surface 12 of the back panel 11 and enhancing the effect of the seal provided by the adhesive 19.

It will be appreciated that the flap 20 provides a suitable component capable of being gripped by bag filling equipment and also provides a guide surface for articles contained in the bag when the bag is opened and the articles are dispensed therefrom.

Referring now to Figures 3 to 7 of the drawings, the bag 10 is manufactured from an elongate sheet 23 of synthetic plastics material (Figure 3), a longitudinal side margin of which is folded about a longitudinal axis as shown in Figure 4, the longitudinal fold being indicated at 24 and the folded portion being indicated at 25. An area of an upper surface of the folded portion 25 extending parallel to the longitudinal fold 24 is oxidatively treated by means of a corona discharge and applied to the treated area by means of an applicator (not shown) is a strip of adhesive 26 extending parallel to the longitudinal fold 24, as shown in Figure 5. A marginal portion of the sheet 23 extending parallel to the folded portion 25 but spaced transversely therefrom is folded about a second fold 27 to provide a second folded portion 28 which covers the first folded portion 25. The transverse dimension inwardly from an outer edge of the second folded portion 28 to the second fold 27 is greater than the transverse dimension between the first and second folds 24 and 27 thereby providing an overlapping portion 29. While the sheet 23 is being provided with the formations shown in Figures 3 to 6, the sheet is being advanced longitudinally in a direction parallel to the folds 24 and 27. After the sheet 23 has been folded into the formation shown in Figure 6, the sheet is welded and severed as shown in Figure 7. The welding operation is effected at regular intervals so that the folded sheet is severed and simultaneously welded transversely at longitudinally spaced intervals to provide successive bags 10.

Preferably, the apparatus which effects welding and severance of the sheet 23 is such that the side seals 21,22 of the bags 10 are mixed seals, each being a seal extending in spaced parallel relation inwardly from a corresponding marginal side edge of each bag which has been formed by a hot blade operated simultaneously with a welding blade providing the spaced parallel seals 21,22.

It will be appreciated that bags 10 provided with such seals will be suitable for containing liquids and fluo-solids, such as powders and fine granular materials, in addition to being suitable for containing solid articles such as coins, since the mixed seals and the adhesive closure provide a hermetically sealed enclosure.

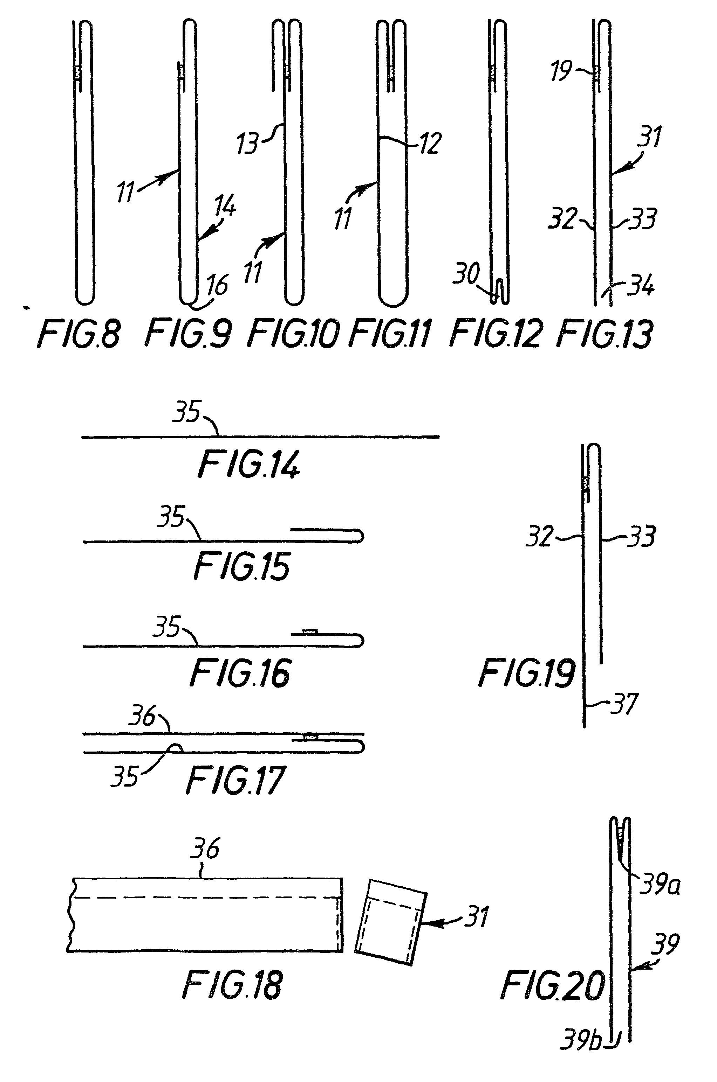

It will also be appreciated that different variations of the bag 10 are possible. One such variation is shown in Figure 8, the flap 20 having been omitted, and another variation is shown in Figure 9, the back panel 11 being of smaller dimension upwardly from the bottom fold 16 compared with the front panel 14. In the variations shown in Figures 10 and 11 the flap 20 has been folded downwardly and sealed along opposite side margins thereof in the side seals 21,22 of the bag to form, in the case of the variation shown in Figure 10, a pouch on the rear surface 13 of the back panel 11 and, in the case of the variation shown in Figure 11 a pouch on the front face 12 of the back panel 11. In the variation shown in Figure 12, the bottom fold 16 of the bag is provided with a gusset 30. The effect of the gusset 30 is such that, when the bag is filled, the gusset flattens to provide the bag with a base whereby the bag may be located on a surface

0032006

in an upward free standing position. Although the gusset 30 is shown in Figure 12 on the particular variation of the bag shown in Figure 8, it will be appreciated that each of the bags shown in Figures 1 and 2 and 9 to 11 may also be provided with a gusset 30.

The variations shown in Figures 8 and 9 are more economical embodiments of the bag shown in Figures 1 and 2 and 10 and 11 in that less material is used in their fabrication. However the variations shown in Figures 8 and 9 do not have the advantage of the flap 20 for guiding articles out of the bag 10 and the variations shown in Figures 10 and 11 provide an extra thickness of material at an upper portion of the back panel 11 which is of assistance when the bag is to be opened.

Referring now to Figure 13 there is shown an embodiment of a bag 31 which is similar to the variation of the bag 10 shown in Figure 8 except that the bag 31 comprises a back panel 32 and a front panel 33 which are not contiguous and, therefore, provide a lower opening 34.

In use, the bag 31 is inverted from the position shown in Figure 13, where the upper opening is closed by means of the adhesive 19, and contents are inserted into the bag through the opening 34. The bag 31 then is closed by bag sealing means (not shown) which welds together opposite facing surfaces of the back and front panels 32 and 33 along margins thereof defining the opening 34 thereby closing the opening.

Referring now to Figures 14 to 18 inclusive, there is shown diagrammatically stages in the manufacture of the bag 31. The stages shown in Figures 14,15 and 16 correspond substantially to the stages shown in Figures 3,4 and 5 respectively. Instead of folding the sheet 35 in the manner shown for sheet 23 in Figure 6, a second sheet 36 is located on the lower sheet 35, as shown in Figure 17 and the lower and upper sheets 35,36 are advanced together in synchronism in a longitudinal direction towards welding appparatus where the sheets 35, 36 are welded together in transverse seams spaced longitidinally one from another to provide plurality of bags 31, as shown in Figure 18.

Referring now to Figure 19, there is shown a variation of the bag 31 in that the back panel 32 extends downwardly beyond the lower opening 34 to provide a lower flap 37. The lower flap 37 is provided so as to be grasped by a gripping mechanism of a bag filling machine. When contents have been inserted into a bag 31 having a lower flap 37, the bag having been inverted from the position shown in Figure 19, the flap 37 is removed and the opening 34 closed by heat sealing the front and back panels 34,33 together. Cutting off of the flap 37 and sealing of the front and back panels 34,33 may be effected simultaneously by means of apparatus for effecting a cut-seal.

It will be appreciated that, although the upper closure of the embodiment of the bag 31 shown in Figure 13, and the variation thereof shown in Figure 19, correspond to the variation of the bag 10 shown in Figure 8, the upper closure of each of the bags 31 shown in Figures 13 and 19 may, alternatively, be provided with any one of the upper end closures shown in Figures 1 and 2 or 9 to 11 inclusive.

Another embodiment of the bag in accordance with the present invention is shown at 39 Figure 20. The bag 39 is similar to the variation of the bag 10 shown in Figure 11 and is manufactured from a single sheet as in the bag 10 shown in Figure 11 but differs from the variation shown in Figure 11 in that the pouch 17 and the pouch formed from the flap 20 are contiguous one with another, the two pouches being de-lineated one from another by means of a row of perforations 39a. The bag 39 thus is provided with an opening 39 which is closed, after contents have been inserted into the bag, by heat sealing in the manner of the variation of the bag 31 shown in Figures 13 and 19.

It will be appreciated that the contiguous connection of the pouches of the bag 39 provides a tamper evident closure in that, once the bag 39 has been opened by separating the pouches one from another along the row of perforations 39a, it is evident that the bag has been opened due to the serrated edges of the pouches.

It will also be appreciated that the bag 39 may be provided with an extended portion similar to the flap 37 of the variation of the bag 31 shown in Figure 19 in order to assist filling of the bag 39 by bag filling machinery.

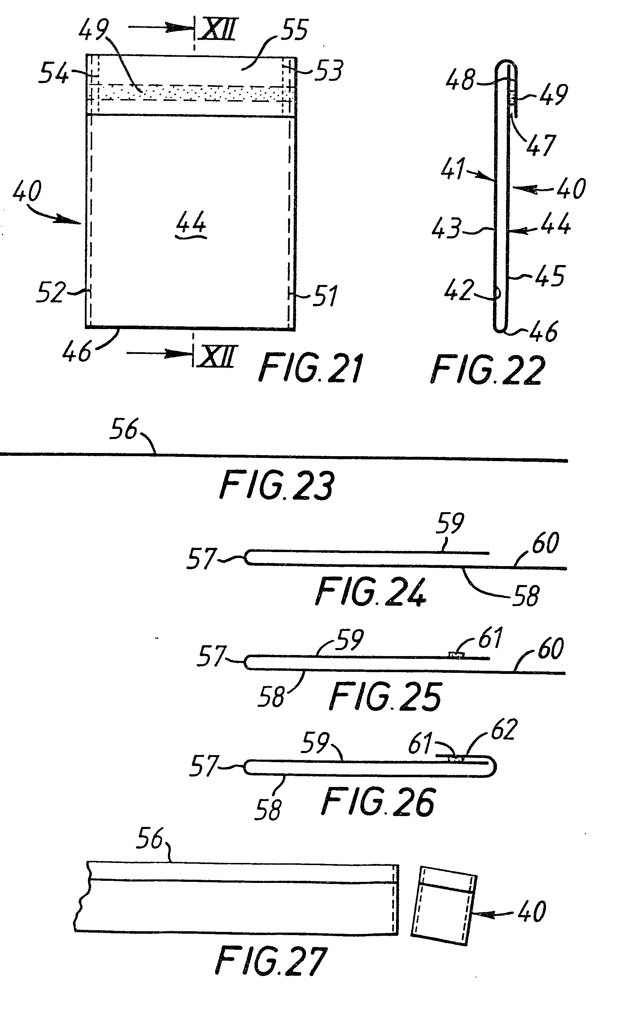

Referring now to Figures 21 and 22, there is shown a further embodiment of a bag 40 comprising a back panel 41, having a front surface 42 and rear surface 43 and a front panel 44 having a front surface 45. The back panel 41 and the front panel 44 are contiguous and extend through a bottom fold 46. The dimension of the back panel 41 upwardly from the bottom fold 46 is greater than the dimension of the front panel 44 in the same direction and provides a flap extending forwardly and downwardly of the front panel 44 adjacent the front surface 45 thereof being secured thereto to form a pouch 47 having a rear surface 48. The front surface 45 of the front panel 44 is provided with a strip of pressure sensitive adhesive 49, similar to the adhesive 19 of the bag 10 shown in Figures 1 and 2, the strip of adhesive extending adjacent the rear surface 48 of the pouch 47 and parallel to the bottom fold 46. The back and front panels 41 and 44 of the bag 40 are welded together in side seals 51, 52 which are similar to the side seals 21,22 of the bag 10.

The flap which forms the pouch 47 is secured at opposite ends thereof in the side seams 51,52 and is provided with parallel lines of perforations 53,54 located inwardly of corresponding side seams 51,52 defining a central portion 55.

In use, the bag 40 is initially opened by severing the central portion 55 of the pouch 47 from adjacent outer side margins of the pouch 47 along the lines of perforations 53, 54. The central portion 55 then is removed from the adhesive 49 and turned in an anti-clockwise direction when viewed in Figure 22, thereby opening the bag 40. The bag may be closed by returning the central portion 55 to the initial position and pressing into contact with the adhesive 49.

Instead of providing rows of perforations 53,54 the front surface 45 of the front panel 44 may be oxidatively treated in an area thereof to be within the pouch 47 so that, during the welding operation providing for the side seams 51,52, the side margins of the pouch 47 are secured to the adjacent front surface 45 of the front panel 44 by a pressure seal or by a weld weakened as a result of the oxidative treatment. In this manner, the whole of the flap forming the pouch 47 may be peeled from the front surface 45 of the front panel 44 and from the adhesive 49 to provide for initial opening of the bag.

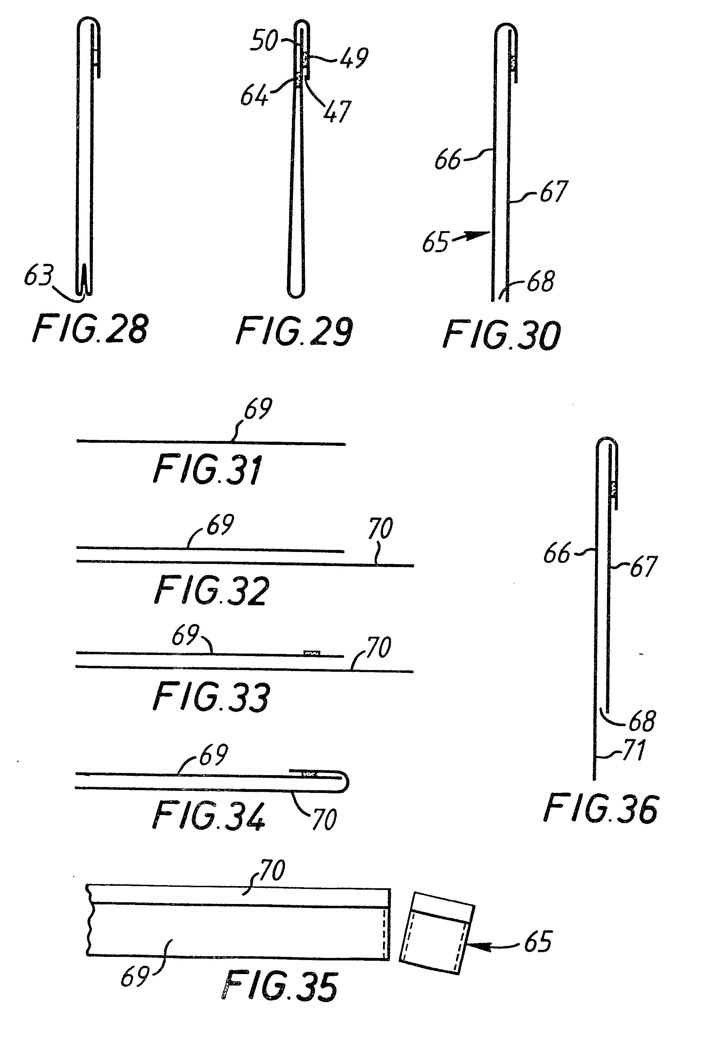

Referring now to Figures 23 to 27 inclusive, there is shown various stages in the manufacture of bags 40. An elongate sheet 56 (Figure 23) is folded, as shown at 57, longitudinally thereof to provide two superimposed layers 58,59 (Figure 24), the lower layer 58 extending transversely of a longitudinal axis of the sheet 56 a distance greater than the upper layer 59 to provide a margin 60. The upper layer 59 is oxidatively treated in a strip extending parallel to the fold 57 and adjacent a free edge of the upper layer 59, the treated area having applied thereto by means of an applicator (not shown) a strip of pressure sensitive adhesive 61 as shown in Figure 25. The margin 60 then is folded, as shown at 62, onto the upper layer 59 and in contact with the adhesive 61, as shown in Figure 26. While the sheet 56 is being folded in the manner illustrated in Figures 23 to 26, the sheet is being advanced in a longitudinal direction thereof and, subsequent to being folded in the manner shown in Figure 26, is operated upon at regular intervals by welding apparatus for welding together transversely the upper and lower layers 59, 58 and the folded margin 60 while simultaneously severing the material of the sheet 56 to provide bags 40. Instead of being provided with a bottom fold 46, the bags 40 may be provided with a gusset, as shown at 63 in Figure 28.

In addition to or instead of providing the adhesive 49, a second band of adhesive 64 may be provided extending parallel to the band of adhesive 49 but being located on a rear surface 50 of the front panel 44. The adhesive 64 would be a reusable pressure sensitive adhesive

similar to the adhesive 49 and would be located below the pouch 47 in a direction towards the bottom fold 46. Such a variation of the bag 40 is shown in Figure 29.

The arrangement of the bag 40 as shown in Figure 29 is such that air passing through the perforations 53, 54 and into the pouch 47 is prevented from passing further into the bag due to the adhesive 64, when the bag is closed. In this manner, the bag 40, when provided in the variation illustrated in Figure 29, is suitable for containing contents which, desirably, should not be contaminated during storage.

It will be appreciated that the variation of the bag 40 shown in Figure 29 may be provided with a gusset 63 as shown in Figure 28.

Referring now to Figure 30, there is shown a bag 65 which is similar to the bag 40 except that the back panel 66 and the front panel 67 of the bag 65 are not contiguous and thereby provide a lower opening 68.

The bag 65 is manufactured in stages as shown in Figures 31 to 35 respectively which correspond substantially to the stages shown in Figures 23 to 27 respectively of manufacture of the bag 40 except that, instead of being manufactured from a single elongate sheet, the bag 65 is manufactured from two superimposed sheets 69 and 70.

Contents are inserted into the bag 65 when the upper opening is closed by inverting the bag from the position shown in Figure 30 and inserting the contents through the lower opening 68. The opening 68 subsequently is closed by bag sealing means.

A variation of the bag 65 is shown in Figure 36 wherein the back panel 66 extends in a direction below the front panel 67 to provide a lower flap 71. The lower flap 71 provides for ease of gripping of the bag 65 by automatic filling of each of the bags 65 and the opening 68 is closed by heat sealing the panels 66 and 67 adjacent the opening 68 and simultaneously severing the inner flap 71 by means of a cut seal.

It will be appreciated that the surface of the material which is to form the bags is oxidatively treated to receive the adhesive. In consequence when each said surface having been secured to the opposite facing surface by the adhesive is separated from the opposite facing surface, the adhesive remains attached to the treated surface and is not transferred to the opposite facing surface. Such an arrangement ensures that the opposite facing surface is free of adhesive thereby avoiding any adhesive interference with contents of the bag when emptied from the bag in contact with the said opposite facing surface.

The effect of the presence of the oxidative treatment of a surface of the material which is to form the bags is that heat sealing of the material in side seams which overlap with areas oxidatively treated, do not result in a weld of respective layers in the side seams. Instead, the heat treatment provides a pressure seam only with a result that surfaces sealed in engagement one with another and one of which is oxidatively treated, can subsequently be peeled and separated one from another. This characteristic provides an advantage because the two opposite facing surfaces defining the preformed opening of the bag, in accordance with the present invention, may be separated for a greater depth extending into the bag than would otherwise be possible if the weld extending longitudinally of the side seams also extended into areas of surfaces which have been oxidatively treated.

It will also be appreciated that the adhesive, in some embodiments of the bag in accordance with the present invention, may be provided in the form of one or more deposits which may be spaced one from another or which may comprise an elongate strip.

It will be appreciated that the adhesive when applied to the material which is to form any of the embodiments described above may be applied prior to or subsequent to folding of the material during manufacture of the bag.

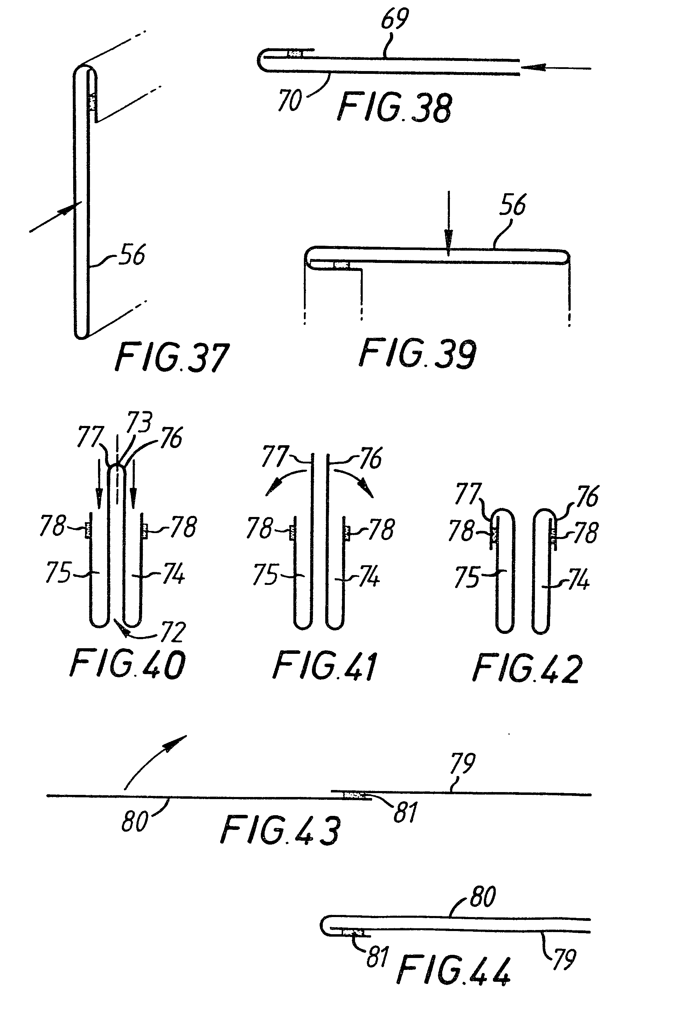

Referring now to Figure 37 of the drawings, there is shown the elongate sheet 56 in the form of a web which has been folded in a form/fill/seal machine in the manner shown in Figure 26, the web 56 being advanced to a filling station at which an article is fed horizontally into an open end portion of the tube formed by the web. The layers of the web subsequently are sealed one to another transversely of the web to envelop the article and the web simultaneously is severed transversely thereof to provide a sealed bag containing the article.

Another form/fill/seal application is shown in Figure 38 in which the two elongate sheet 69 and 70 shown in Figure 33 and in the form of webs are arranged in the manner shown in Figure 34 when advanced through a form/fill/ seal machine towards a filling station of the machine. At the filling station, an article is inserted horizontally between the webs 69 and 70, as shown by the arrow in Figure 38, and the layers of the webs are sealed together to envelop the article. The webs 69, 70 then are severed transversely thereof to provide a sealed bag containing the article.

Referring now to Figure 39, there is shown another form/fill/seal application in which a web 56 when delivered to a vertical form/fill/ seal machine is folded in similar fashion to that shown in Figure 37 except that the web 56, instead of being advanced longitudinally and horizontally in the machine, is advanced longitudinally but vertically in the machine to a filling station. At the filling station, an article is inserted into a tube formed by the folded web 56. The layers of the web 56 subsequently are simultaneously sealed one to another and severed thereby to provide a sealed bag containing the article.

Referring now to Figures 40 to 42, there is shown diagrammatic representations of stages in a simultaneous form/fill/seal application of two bag formations of the type described with reference to Figures 21 to 27. The formations are provided by means of a web 72 which is folded longitudinally at 73 to provide, in transverse cross section, an inverted U formation, the limbs of the U being folded outwardly in opposite directions to provide pouches 74, 75 of equal depth but of less depth than the U formation thereby providing the pouches 74, 75 with an extended limb portion 76, 77. The web 72 has applied thereto adjacent each outer wall of the pouches 74, 75 an adhesive strip 78 extending longitudinally of the web 72.

The web 72 is advanced to a filling station at which articles are simultaneously fed into the the pouches 74, 75 as shown by the arrows in Figure 40. The web 72 then is slit longitudinally, as indicated by the dotted line in Figure 40. The extended limb portions 76, 77 are folded outwardly away from one another, as indicated by the arrows in Figure 41 and onto the adhesive strip 78, as indicated in Figure 42, thereby providing two web formations similar to that shown in Figure 37. The layers of each of the two web formations then are sealed transversely thereof and severed to provide sealed bags containing articles. The process is repeated at predetermined intervals longitudinally of the web to provide further sealed bags each containing an article or articles.

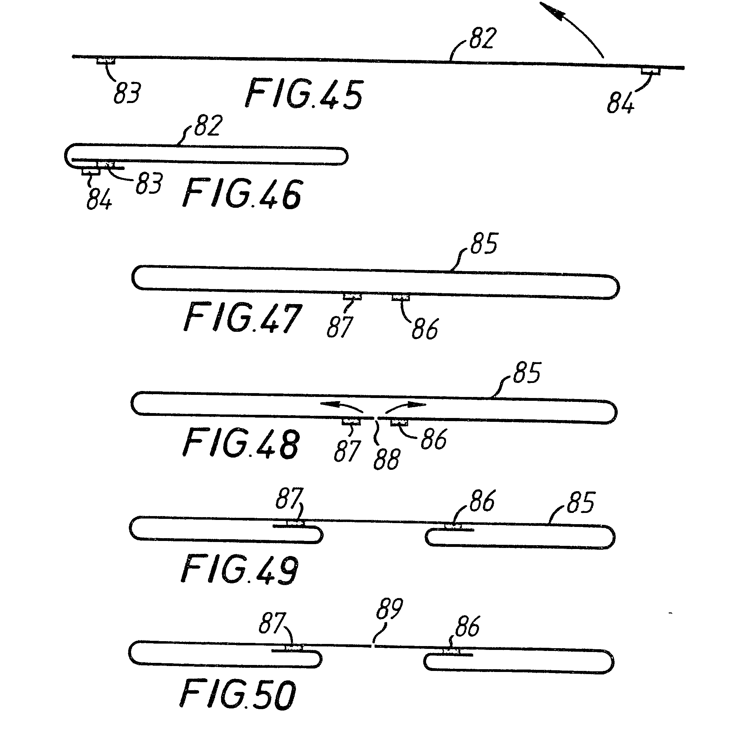

Referring now to Figures 43 and 44, there is shown an alternative method of manufacture of the bag of the type described with reference to Figure 30 in that webs 79, 80 are prearranged in overlapping formation, the overlapping areas being adhesively secured together by means of a strip of adhesive 81 corresponding to the adhesive 78 of the arrangement shown in Figures 40 to 42. The webs 79 and 80 and the adhesive 81 together comprise a composite web which is wound in the form of a reel for storage purposes and subsequently is .fed to a form/fill/seal machine in which the web 80 is folded in the manner indicated by the arrow in Figure 43 so that the webs 79, 80 are arranged in the manner shown in Figure 44. The form/fill/seal machine operates in the manner described with reference to Figure 38.

Referring now to Figures 45 and 46, there is shown a web 82 having a strip of adhesive 83 located thereon, the adhesive 83 being similar to the adhesive 81 of the composite web shown in Figure 43 and being located on a lower surface of the web 82 and extending parallel to an edge margin of the web. The web 82 also is provided with a component 84 in the form of an elongate ink strip having a thickness corresponding to the thickness of the adhesive 83 so that, when the web 82 is wound in the form of a reel, the layers of the web in the reel extend are symetrical about a radial axis extending through a centre of the reel In use, the web is fed to a form/fill/seal machine wherein the web is folded in the manner indicated by the arrow in Figure 45 and is provided with the formation shown in Figure 46. The form/fill/seal machine then operates as described with reference to Figures 37 and 39.

Referring now to Figures 47 to 50, there is shown a tube 85 having a pair of spaced parallel adhesive strips 86, 87 applied thereto, the strips extending parallel to a longitudinal axis of the tube 85 and each being similar to the adhesive strip 83. The tube is slit longitudinally between the strips 86, 87 as shown at 88 in Figure 48. Subsequent to slitting the tube at 88, opposite facing marginal portion are then folded longitudinally in opposite directions, as shown by the arrow in Figure 48, inwardly of the tube 85 so that the adhesive strips 86, 87 are located opposite an inner surface of the opposite wall of the tube 85 as shown in Figure 49. Finally, the tube is slit longitudinally at a transverse distance equi-distant from the longitudinal folds, as shown at 89 in Figure 50. The layers of the folded and severed portions of the tube 85 are then welded together in longitudinally spaced transverse welds which simultaneously sever the layers to provide bags of the type described with reference to Figures 1 and 2.

It will be appreciated that the tube 85 may be severed at 88 before, or simultaneously during, application of the adhesive strips 86, 87. It will also be appreciated that the transverse welds may be provided before, or simultaneously during, slitting of the tube at 89.

Furthermore, it will be appreciated that bags of the type described with reference to anyone of Figures 8, or 10 to 13 or 20 be made from the tube 85 by providing additional longitudinal folds and /or additional longitudinal slits.

0032006

CLAIMS

1.      A bag having two opposite facing surfaces defining a preformed opening, at least one of said surfaces having a reusable adhesive thereon so that closure of the opening is effected by pressing the said surfaces together in the area of the adhesive thereby to provide a re-openable closure.

2.      A bag as claimed in claim 1 wherein there is provided a pouch and at least one of said surfaces comprises a surface of a wall of said pouch.

3.      A bag as claimed in claim 2 wherein the pouch is located on an outer surface of the bag.

4.      A bag as claimed in claim 3 wherein the pouch comprises a flap, opposite side margins of which are secured to corresponding side margins of the bag thereby forming the pouch, the flap being adapted to be unfolded from a pouch forming position to open the bag.

- 35 -

0032006

5. A bag as claimed in claim 4 wherein the flap is provided with rows of perforations, each row extending in substantially spaced parallel relation adjacent a corresponding one of the side margins of the flap.

6. A bag as claimed in claim 5 wherein additional adhesive is located inwardly of the opening for adhesively securing together walls of the bag.

7. A bag as claimed in claim 2 wherein the pouch is located on an inner surface of the bag.

8. A bag as claimed in claim 7 wherein there is provided a second pouch.

9. A bag as claimed in claim 8 wherein the second pouch is located on an inner surface of the bag.

10. A bag as claimed in claim 9 wherein the pouches are contiguous one with another and comprise material having a weakened portion whereby the pouches are separable one from another along said weakened portion.

11. A method of manufacturing bags from superimposed layers of web material comprising the steps of applying adhesive to a said layer before applying a superimposed layer thereon so that, when the superimposed layer is applied thereon, the said layer and the said superimposed layer are adhesively secured one to another.

12. A method as claimed in claim 11 comprising an initial step of folding an initial layer of web material so that a portion of said folded layer comprises the said layer for receiving said adhesive.

13. A method as claimed in claim 1 comprising a subsequent step of folding a portion of said folded initial layer onto said layers at a location covering said adhesive to provide said superimposed layer.

14. A method of manufacturing bags from web material having a strip of pressure sensitive adhesive substantially parallel to a marginal edge portion of the web material comprising the steps of folding a portion of the web material on a first longitudinal fold to provide two layers, one overlying another, and folding another portion of the web material on a second longitudinal fold to provide a third layer contacting said adhesive.

15. A method according to claim 14 comprising an initial step of applying a component relative to the web material in spaced relation transversely of the web material from said adhesive.

16. A method of manufacturing bags from flexible tubular material including the steps of applying at least two spaced substantially parallel strips of pressure sensitive material longitudinally of the tube, slitting the tube longitudinally between said two strips, folding opposite facing severed marginal portions about longitudinal folds in opposite directions inwardly of the tube so that said strips are located opposite an inner surface of a wall of said tube and slitting said wall longitudinally at a transverse distance equi-distant from said

longitudinal folds.

FIG.1

FIG.2

FIG.3

FIG.4

FIG.5

FIG.6

FIG.7

FIG.8  FIG.9  FIG.10  FIG.11  FIG.12  FIG.13

FIG.14

FIG.15

FIG.16

FIG.17

FIG.18

FIG.19

FIG.20

FIG.21

FIG.22

FIG.23

FIG.24

FIG.25

FIG.26

FIG.27

FIG.28

FIG.29

FIG.30

FIG.31

FIG.32

FIG.33

FIG.34

FIG.35

FIG.36

FIG.38

69

70

FIG.37

56

FIG.39

56

FIG.40

77  73  76

78        78

75        74

72

FIG.41

77        76

78        78

75        74

FIG.42

77        76

78        78

75        74

FIG.43

80        81

79

FIG.44

80

81        79

FIG.45

FIG.46

FIG.47

FIG.48

FIG.49

FIG.50